# EUROPEAN PATENT APPLICATION

(11) **EP 2 090 647 A1**
(43) Date of publication of application: **19.08.2009**
(21) Application number: 08101056.3
(22) Date of filing: 29.01.2008
(51) Int. Cl.: C12H 1/15, C12G 1/022

(54) **A method for reducing the spoilage of a wine**

(71) Applicant: Chr. Hansen A/S, 2970 Hoersholm (DK)
(72) Inventor: van den Brink, Johannes Maarten, 2730, Herlev (DK); Bjerre, Kristine, 2200, Copenhagen N (DK)
(74) Representative: Hagen, Klaus Bach

(57) **Abstract**

A method for production of a wine, wherein the method is reducing the spoilage of wine by unwanted aerobic microorganisms, involving treating grape juice during the alcohol yeast fermentation or the wine during storage with glucose oxidase.

## Description

### FIELD OF THE INVENTION

The present invention relates to a method for production of a wine, wherein the method is reducing the spoilage of wine by unwanted aerobic microorganisms, involving treating grape juice during the alcohol yeast fermentation or the wine during storage with glucose oxidase.

### BACKGROUND ART

A major problem in the wine industry is spoilage of wine by unwanted microorganisms. Bacteria genera like *Pediococcus, Lactobacillus* and *Acetobacter,* and yeast genum *Brettanomyces* are major threats to the quality of wine. The bacteria are known to produce acetic acid from sugar, and for some species, even biogenic amines from free amino acids. *Brettanomyces* is known to produce unwanted flavour components that in excess are rejected by consumers and wine experts.
It is estimated that the percentage of downgraded wine to be around 1 - 5%, corresponding to approximately 2.6 million - 13 million hl.

Traditionally, this spoilage problem has been solved by using chemical preservatives such as sulphites. However, there is a growing consumer demand for wines containing lower levels of chemical preservatives.

The article of D.F. Malherbe et al (Appl. Microbial Biotechnology (2003) 61:502-511) reads in the abstract:
"There is a growing consumer demand for wines containing lower levels of alcohol and chemical preservatives. The objectives of this study were to express the *Aspergillus niger* gene encoding a glucose oxidase (GOX; b-d-glucose:oxygen oxidoreductase, EC 1.1.3.4) in *Saccharomyces cerevisiae* and to evaluate the transformants for lower alcohol production and inhibition of wine spoilage organisms, such as acetic acid bacteria and lactic acid bacteria, during fermentation.
The yeast transformants also displayed antimicrobial activity in a plate assay against lactic acid bacteria and acetic acid bacteria. This might be explained by the fact that a final product of the GOX enzymatic reaction is hydrogen peroxide, a known antimicrobial agent."
Glucose oxidase (EC 1.1.3.4) catalyzes following reaction:

Beta-D-glucose + O₂ <=> D-glucono-1,5-lactone + H₂O₂

In short, this article of D.F. Malherbe explains that a glucose oxidase (expressed in yeast) could have antimicrobial activity due to hydrogen peroxide production. The antimicrobial activity is shown in a plate assay, i.e. not in yeast fermented wine as such.

As known to the skilled person hydrogen peroxide (H₂O₂) is generally not wanted in wine. For instance it may give rise to an unwanted wine color. This fact is for instance discussed in US4675191 (see below).
Accordingly, since H₂O₂ is generally unwanted and the D.F. Malherbe article explains that H₂O₂ is responsible for a possible wine relevant antimicrobial effect (in article only shown in a plate assay) one may say that this article teaches away from using glucose oxidase as an antimicrobial in wine production to solve the spoilage problem.

In US4675191 (Novo Industri, Denmark - published 1987) is described a method for reducing alcohol content in wine that involves use of the enzyme glucose oxidase.
With respect to the described method reads column 2, lines 25-29: "The method of this invention comprises treating unfermented grape juice with glucose oxidase in the presence of oxygen, thereby converting glucose in the grape juice into gluconic acid and thereafter fermenting the so-treated grape juice."
With respect to hydrogen peroxide (H₂O₂) is said in column 5, lines 39-44: "In a preferred embodiment of the method according to the invention, the glucose oxidase preparation contains catalase. If no catalase is present, the hydrogen peroxide produce in Step 1 has a tendency to produce a wine color which is somewhat lighter than the conventional wine color."
Catalase (EC 1.11.1.6) catalyzes the reaction:

2 H₂O₂ <=> O₂ + 2 H₂O

In short, US4675191 explains that catalase should preferably be used to remove the glucose oxidase generated H₂O₂. The glucose oxidase is added to the unfermented grape juice and is not added during or after the actual yeast alcohol fermentation. Further, in this patent anything in relation to the spoilage problem is not mentioned.

### SUMMARY OF THE INVENTION

The problem to be solved by the present invention is to provide a new method for reducing the spoilage of wine by unwanted microorganisms, in particular aerobic unwanted microorganisms. Accordingly, since there is a reduced spoilage of the wine one may use less chemical preservatives such as sulphites. Examples of relevant unwanted aerobic microorganisms are bacteria from the genera *Pediococcus, Lactobacillus, Acetobacter* or yeast genum *Brettanomyces.*

The solution is based on that the present inventors have identified that use of glucose oxidase gives a significant reduction in particular of aerobic unwanted microorganisms.

Catalase was also used in experiments of the inventors and this illustrates that the glucose oxidase generated H₂O₂ is not the main element responsible for the reduced spoilage of the wine.

Without being limited to theory, it is believed that a main reason for the antimicrobial effect is that glucose oxidase effectively removes O₂ from the grape juice.
This theory is supported by the fact that experiments demonstrated that aerobic unwanted microorganisms such as *Pediococcus, Lactobacillus and Acetobacter* were essentially eliminated in the presence of glucose oxidase whereas a wanted anaerobic *Oenococcus oeni* microorganism was not eliminated.

As known to the skilled person, normal yeast fermentation generally consists of two pa rts :

### Part 1

### Aerobic (Oxygen is present)

This is the initial rapid process where the yeast is doubling its cell number every 4 hours. (Usually 24-72 hours)

### Part 2

### Anaerobic (No or little oxygen present)

Slower activity and the yeast focuses on converting sugar (both glucose and fructose) to alcohol (sugar => 2 ethyl alcohol + 2 CO₂) rather than increasing the number of yeast cells. (This process can take from days to weeks depending on the yeast and the recipe).

The inventors demonstrated that glucose oxidase is able to "survive" for a long time during wine production. For instance, it can maintain effective activity during the yeast alcohol fermentation. As discussed above, during a great part of the yeast alcohol fermentation there is virtually no O₂ present. However, the small amount of O₂ that is present (e.g. coming from the surrounding air) can then constantly be removed by the glucose oxidase from the grape juice and thereby prevent growth of unwanted aerobic microorganisms such as *Pediococcus* and *Lactobacillus.* See working examples herein for further details.

In the present context it may be seen as an important fact that present inventors identified that the glucose oxidase is surprisingly stable under the normal conditions of wine production in particular during the yeast alcohol fermentation or during storage of the wine. This means that the glucose oxidase may be added as a single one time addition step to the wine and it is then active for a sufficiently long time to remove O₂ when it is present during the wine production.

Without having the knowledge of the surprisingly big stability of glucose oxidase during wine production the skilled person would not have considered to use it for reducing the spoilage of wine by unwanted microorganisms. One reason for this is that the skilled person would have believed that it was necessary to continuously add new glucose oxidase to continuously having enough active glucose oxidase to continuously be able to remove O₂ when it is present during the wine production.

Glucose oxidase (EC 1.1.3.4) catalyzes following reaction:

Beta-D-glucose + O₂ <=> D-glucono-1,5-lactone + H₂O₂

Within the grape juice is the generated "D-glucono-1,5-lactone" spontaneously converted into gluconic acid. Accordingly, D-glucono-1,5-lactone is removed and the equilibrium is therefore going to the right => glucose and O₂ are removed during the wine production.

Catalase (EC 1.11.1.6) catalyzes the reaction:

2 H₂O₂ <=> O₂ + 2 H₂O

If the enzyme preparation also has catalase activity the created H₂O₂ is also removed => equilibrium is therefore going even more to the right => more glucose and O₂ are removed. Involvement of catalase activity is a preferred embodiment herein - see discussion below.

Accordingly, a first aspect of the invention relates to a method for production of a wine, wherein the method is reducing the spoilage of wine by unwanted aerobic microorganisms, which comprises following steps:
(1): treating grape juice during the alcohol yeast fermentation or the wine during storage with an effective amount of a glucose oxidase composition, comprising a relevant effective amount of active glucose oxidase enzyme as such, for a period of time sufficient long to remove a significant part of O₂ from the grape juice during the alcohol yeast fermentation or from the wine during storage;
   and thereafter,
(2): performing further adequate step(s) to make the final wine.

Embodiment of the present invention is described below, by way of examples only.

### DEFINITIONS

All definitions of herein relevant terms are in accordance of what would be understood by the skilled person in relation to the herein relevant technical context.

The term "reducing the spoilage of wine by unwanted aerobic microorganisms" in relation to a wine produced according to the method of the first aspect relates herein to a reduced number of unwanted aerobic microorganisms in the wine as compared to a wine produced under identical conditions but without the treatment with glucose oxidase of step (1) of the first aspect. In fact this term may be seen as directly relating to using an effective amount of glucose oxidase.
If an effective amount of glucose oxidase is used one get removed a significant part of O₂ and thereby a reduced growth of unwanted aerobic microorganisms and thereby a reduced spoilage of the wine.
As discussed above, examples of relevant unwanted aerobic microorganisms are bacteria from the genera *Pediococcus, Lactobacillus, Acetobacter* or yeast genum *Brettanomyces.* It is routine work for the skilled person to investigate if the wine has a reduced number of one or more bacteria from one or more of these genera.
In line of above, the final wine of step (2) has a reduced number of unwanted aerobic microorganisms, wherein the unwanted aerobic microorganisms is at least one bacteria from the genera *Pediococcus, Lactobacillus, Acetobacter* and yeast genum *Brettanomyces.* Preferably, the final wine of step (2) has a reduced number of at least one bacteria from the genera *Pediococcus* and *Lactobacillus.*

The term "glucose oxidase composition" in relation to the term "effective amount of a glucose oxidase composition comprising a relevant effective amount of active glucose oxidase enzyme as such" relates herein to a composition comprising a relevant effective amount of active glucose oxidase enzyme as such. As discussed below it could e.g. be a solution comprising active glucose oxidase enzyme as such. In other words, the term "glucose oxidase composition" as used herein does not cover e.g. a composition comprising only recombinantly made GMO yeast cells that are capable of recombinantly expressing a glucose oxidase - e.g. as described in the article D.F. Malherbe as discussed above. A composition comprising only such GMO yeast cells are not comprising active glucose oxidase enzyme as such, since one first get active glucose oxidase enzyme as such when the yeast cells are growing under e.g. the alcohol fermentation.

### DETAILED DESCRIPTION OF THE INVENTION

### Treating grape juice or wine during storage with glucose oxidase - step 1

As discussed above, the inventors demonstrated that glucose oxidase is able to "survive" for a long time during wine production. For instance, it can maintain effective activity during the yeast alcohol fermentation.

Accordingly, the effective amount of glucose oxidase may be added some time before the actual start of the alcohol yeast fermentation (e.g. to the unfermented grape juice) and still be active during the alcohol yeast fermentation.

If the glucose oxidase is added to the unfermented grape juice, the actual process steps of the method as described herein may be seen as virtually identical to the process steps of US4675191. As discussed above, in US4675191 is glucose oxidase added to the unfermented grape juice in order to remove glucose from the unfermented juice to make a low alcohol wine. However, as discussed above, in this patent anything in relation to the spoilage problem is not mentioned. To reduce the spoilage problem is an essential part of the method as described herein and this issue is not mentioned at all in US4675191. This means that by reading and performing the method of US4675191 the skilled person would still believe to have the spoilage problem and would therefore perform adequate steps such as using normal amounts of e.g. chemical preservatives such as sulphites. After reading the herein described disclosure the skilled person would understand that the wine spoilage problem is at least significantly solved and therefore seriously consider using smaller amounts of e.g. chemical preservatives.

However, since the main purpose of the present invention not is to make a low alcohol wine it is preferred to add the glucose oxidase composition close to the start of the actual yeast alcohol fermentation or after the actual yeast fermentation has started. The step of addition the glucose oxidase enzyme at these points of the wine production is not described nor suggested in US4675191.

Accordingly, in a preferred embodiment the treatment of the grape juice during the alcohol yeast fermentation of step (1) of the first aspect is done by addition of the glucose oxidase composition within at maximum 30 minutes before the yeast cells used for the alcohol yeast fermentation are added to the grape juice or during the actual alcohol yeast fermentation, which by definition is after the yeast cells used for the alcohol yeast fermentation have been added to the grape juice.

For practical reasons it may be preferred to add the glucose oxidase composition at roughly the same time as one adds the yeast cells used for the alcohol yeast fermentation to the grape juice.

As known to the skilled person, sometimes malolactic starter cultures are used to perform a so-called malolactic fermentation in wine production.
Malolactic fermentation describes a fermentation by bacteria (normally *Oenococcus oeni -* formerly called *Leuconostoc oenos*) that are able to convert malic acid from grapes into lactic acid. It occurs alongside, and in addition to, regular fermentation, and can be desirable for two reasons:
Reducing excess acidity. By converting the relatively harsh tasting malic acid into the softer lactic, ML softens the flavor of the wine.
Adding complexity. In addition to converting the acid, malolactic bacteria can add a component of 'buttery' flavour (diacetyl), along with more complex flavors and aromas.

Accordingly in a preferred embodiment the treatment of the grape juice during the alcohol yeast fermentation of step (1) of the first aspect is done by addition of the glucose oxidase composition together with a malolactic starter culture, preferably a *Oenococcus oeni* malolactic starter culture.

As discussed above, the treatment with glucose oxidase as described herein may be during the storage of the wine.

Accordingly, in a preferred embodiment the treatment of the wine during storage of step (1) of the first aspect is done by addition of the glucose oxidase composition during storage of the wine.

As understood by the skilled person the term "during storage of the wine" is generally understood as the storage after the alcohol yeast fermentation has been finalized.

### Catalase activity

As discussed above, the use of an enzyme preparation with catalase activity in the method as described herein may also result in the removal of the H₂O₂ created by glucose oxidase.

Hydrogen peroxide (H₂O₂) may result in an unwanted wine color and may therefore not be a desirable component in the wine.
Furthermore, as discussed above, by removing H₂O₂ one may get the glucose oxidase equilibrium moved even further to the left => more glucose is removed.

Accordingly, in a preferred embodiment of step (1) of the first aspect the grape juice during the alcohol yeast fermentation or the wine during storage is also treated with an effective amount of a preparation with catalase activity for a period of time adequate to convert at least a portion of the H₂O₂ in the grape juice or the wine during storage into O₂ + H₂O.

### Glucose oxidase

The glucose oxidase to be used in a method as described herein may be obtained from numerous different suitable sources such as relevant commercially available enzyme products.

As known to the skilled person there are numerous different commercially available glucose oxidase enzyme products on the market with enzymes that work within the normal conditions of wine making (e.g. relevant pH values, temperature etc).

In the working examples below the following commercially available enzyme product was used:
glucose oxidase: Hyderase® (from Amano)

An advantage of the Hyderase® product is that it also comprises catalase activity.

### Preferred production parameters - step 1 of first aspect

As known to the skilled person, changes in the wine-making procedures alter the organoleptic properties of the wine product. Therefore, the close-fit between the usual wine-making procedures and practice of the method as described herein is preferred. Insofar as possible, nothing is done through practice of this invention to alter taste and bouquet of the wine.

In essence the actual wine productions parameters are generally the normal wine productions parameters. The only change from normal practice may be seen in the addition of a glucose oxidase composition as described herein.

For example, enzyme catalyzed processes are usually conducted within the pH optimum of the enzyme. Preferred practice of this invention is to treat the grape juice without adjusting the pH thereof. Fortunately, suitable relevant commercially available products of the enzymes as used herein exhibit adequate activity and stability in e.g. the pH range 3-4 usual for wine production.

It is to be understood that any enzyme as described herein can be used in the method according to the invention, provided that it exhibits a reasonable relevant activity and stability at the pH and temperature prevailing during the method for producing wine. Thus, both soluble and immobilized enzyme preparations may be used, even if soluble enzyme preparations are usually preferred.

It is easy for the worker skilled in the art to find out how much enzyme of a given kind is needed as described herein.
For instance, depending on the details of treatment times and temperatures:
(i): a glucose oxidase activity roughly between about 100 and 50,000,000 international units per hl of grape juice will be appropriate

As known to the skilled person an international unit is defined as that amount of the enzyme that catalyses the conversion of 1 micro mole of substrate per minute. The conditions also have to be specified. As known to the skilled person one usually takes a temperature of 30°C and the pH value and substrate concentration that yield the maximal substrate conversion rate.
Herein the international units are defined as described above and according to the art, i.e. determined at a temperature of 30°C and the pH value and substrate concentration that yield the maximal substrate conversion rate.

As known to the skilled person it is routine work for the skilled person to determine international units for the enzymes as described herein and it may be determined within a herein relatively minor uncertainty.
For instance, as known to the skilled person, the optimal pH value and optimal substrate concentration may vary for a specific enzyme of interest (e.g. a specific glucose oxidase). However, it is easy to identify this optimal pH and substrate concentration since it is e.g. generally given on the product documentation for a relevant commercial enzyme product. Further, in general for a specific enzyme of interest it is routine work to identify parameters such as optimal pH and substrate concentration.

In a preferred embodiment there is used:
(i): a glucose oxidase activity roughly between about 1,000 and 1,000,000 international units per hl of grape juice.

The glucose oxidase may be added in order to reduce the content of unwanted microorganisms - see e.g. below.
However, it may as well be added for prophylactic reasons, i.e. as preventive measure before any real spoilage problem actually has occurred during the wine making process.

In a preferred embodiment of, the relevant enzyme preparation(s) is a solid water soluble preparation, preferably a non-dusting preparation. The storage stability of a solid preparation is better than the storage stability of a liquid preparation, and also, it is unnecessary to add any conservation agents. It is recommended, though, that the user dissolves the solid form agent in a small amount of water and immediately before use, adds this solution during the wine production as described herein.

As discussed above and shown in working examples herein addition of a glucose oxidase composition as discussed herein essentially prevent growth of unwanted aerobic microorganisms such as *Pediococcus, Lactobacillus* and *Acetobacter.* There is no reason to believe that addition of a glucose oxidase composition as discussed herein should not also essentially prevent growth of unwanted aerobic *Brettanomyces* microorganisms.

As said above, bacteria from the genera *Pediococcus, Lactobacillus, Acetobacter* and yeast genum *Brettanomyces* is a major spoilage threat to the quality of wine.

Accordingly, in a preferred embodiment the effective amount and the period of time for glucose oxidase enzyme treatment during step (1) is so that:
(A): 4 days after the addition of the effective amount of the glucose oxidase the amount of the unwanted aerobic microorganisms it reduced by a factor of at least 100; and
wherein the unwanted aerobic microorganisms are the total amount of one or more species selected from the genera *Pediococcus, Lactobacillus, Acetobacter* or *Brettanomyces.*

As understood by the skilled person, in order to investigate if one has added sufficient amount of glucose oxidase to get the above mentioned reduction in unwanted microorganisms one simply has to measure the total amount of any species of the above mentioned 4 different genera (e.g. *Pediococcus parvulus, Pediococcus pentosaceus, Lactobacillus brevis and Acetobacter* aceti) at time zero (i.e. just before addition of enzyme). One then simply has to continue the wine production process and after 4 days analyze it again for the same total amount of unwanted microorganisms.
Essentially all industrially relevant spoilage species from these genera are well known to the skilled wine maker and it is therefore routine work for him to determine the total amount of these in a herein relevant wine sample.

Due to the fact that the aroma, the taste and the bouquet of the wine are properties which are extremely sensitive, it can not be predicted whether the wine produced according to the invention will possess the wanted properties, inasmuch as the wine produced according to the invention, with glucose oxidase preparations, will contain traces of glucose oxidase and may differ from ordinary wine in regard to the concentration of other constituents, too. However, it has been found that the wine produced according to the invention possesses all normal properties of wine, including taste and bouquet.

### Extra addition of glucose isomerase

In some working examples herein glucose isomerase is also added.
The present inventors have identified that addition of glucose isomerase may significantly decreases the risk of unwanted stuck alcoholic fermentations.
Stuck alcoholic fermentations relate to that the yeast is not fermenting all the sugar and one therefore may get a too sweet wine.
In the present context stuck fermentation may result in residual sugar late in the yeast alcoholic fermentation process.
It is known to the skilled person that unwanted spoilage microorganisms of yeast genum *Brettanomyces* may start to grow significantly relatively late in the alcoholic fermentation process - using the residual sugar in the grape juice.

Accordingly, in an embodiment of the method as described herein there is also added glucose isomerase by following extra step:
(A): treating grape juice during the alcohol yeast fermentation with an effective amount of glucose isomerase.

The present inventors have identified that glucose isomerase is relatively stable during normal wine production conditions. Accordingly, the effective amount of glucose isomerase may be added before the actual start of the alcohol yeast fermentation and it will then still work satisfactorily during the alcohol yeast fermentation.
Alternatively, the effective amount of glucose isomerase may be added during the alcohol yeast fermentation. If it is added during the alcohol yeast fermentation it is preferably done in the beginning of the fermentation, e.g. at roughly the same time as yeast is added to the grape juice.

In relation to the method as described herein is glucose isomerase EC 5.3.1.5 (official name Xylose isomerase). The official name for this EC 5.3.1.5 class is xylose isomerase. However, as known to the skilled person as an alternative name it may also be called glucose isomerase. Glucose isomerase is for instance the name used in relevant commercial products of this enzyme class, such as e.g. the commercial product used in working examples herein.
The herein relevant and well known reaction catalyzed by glucose isomerase in the grape juice is following:

D-glucose <=> D-fructose.

As known to the skilled person this enzyme class may also catalyze the reaction:

D-xylose <=> D-xylulose.

This xylose related reaction is less relevant herein.

The glucose isomerase to be used in a method as described herein may be obtained from numerous different suitable sources such as relevant commercially available enzyme products.

As known to the skilled person there are numerous different commercially available glucose isomerase enzyme products on the market with enzymes that work within the normal conditions of wine making (e.g. relevant pH values, temperature etc).

In the working examples below was used following commercially available enzyme product:
glucose isomerase: Product from Sigma (# G4166-50g). Catalogue number - see a working example herein.

Depending on the details of treatment times and temperatures:
a glucose isomerase activity roughly between about 100 and 5,000,000 international units per hl of grape juice will be appropriate.

### Preferred production parameters - step 2 of first aspect

Conduit of step 2 of first aspect - performing further adequate step(s) to make the final wine - is an obligatory step of the method of the invention. However, no detailed discussion of this step needs to be provided here since conduct of conventional wine making practices are contemplated expressly and those practices are well known to persons skilled in the enology art. It has already been emphasized herein that imposition of any needless changes in the mechanics of the wine making process are avoided in the preferred practice of this invention.

In a preferred embodiment the wine is white wine, red wine, still wine or sparkling wine.

### EXAMPLES

### EXAMPLE 1: Enzymatic inhibition of spoilage bacterial growth in unfermented grape juice

Spoilage bacteria were pre-cultured overnight in 10 ml liquid media as described in Table I. From the overnight cultures 10 µl was used to inoculate 20 ml grape juice (Pinot Blanc 2007, Germany, pasteurized) in 50 ml blue cap tubes covered with perforated parafilm (Table I). To the grape juice 10 mg glucose oxidase (Hyderase, Amano, > 15,000 u/g) was added while no enzyme was added to the control experiments. The samples were allowed to stand at room temperature for 7 days. At day 2, day 4 and day 7 samples were taken for CFU determination. All experiments were carried out in triplicates. Results are summarized in Table II.

From this analysis it becomes clear that growth of most spoilage bacteria is completely inhibited by treatment of the sample with glucose oxidase after 4 days of incubation. At this time growth of *E. coli* and *Lb. brevis* subsp. *otakiensis* could still be observed.
After seven days of incubation growth of all bacteria had been strongly reduced in the glucose oxidase samples, including *E. coli* (not detectable in glucose oxidase treated juice and 7.3 E+06 CFU/ml in the untreated samples) and *lb. brevis* subsp. *Otakiensis* (3.3 E+02 CFU/ml in the glucose oxidase treated juice versus 1.7 E+07 CFU/ml in the untreated juice).

These results indicate a strong inhibition of many different spoilage bacteria by the presence of glucose oxidase.

**Table I, pre-culture of spoilage bacteria. The number of viable cells used to inoculate the grape juice is indicated.**

| Strain | Growth | Temperature | CFU added to |
|---|---|---|---|
| | media | (°C) | juice |
| *Acetobacter aceti* | YPM | 30 | 3.0 E+05 |
| *Lactobacillus brevis* subsp. | MRS | 30 | 1.8 E+05 |
| *Gravesensis* | | | |
| *Lactobacillus brevis* subsp. | MRS | 30 | 3.0 E+04 |
| *Otakiensis* | | | |
| *Lactobacillus nagelii* | MRS | 37 | 6.8 E+05 |
| *Pediococcus parvulus* | MRS | 30 | 5.4 E+05 |
| *Pediococcus pentosaceus* | MRS | 30 | 3.4 E+06 |
| *Eschericia coli* | LB | 37 | 5.5 E+04 |

### Results

From the results of example 1 it can be seen that growth of many unwanted aerobic microorganisms was strongly inhibited by the presence of GOX. *Pediococcus,* and *Lactobacillus* (with the exception of *Lb. Brevis* subsp. *otakiensis*) were essentially eliminated in the presence of glucose oxidase after 4 days while growth of *E. coli* was fully inhibited by GOX after 7 days. Growth of *Acetobacter* was absent in GOX treated samples while clear growth could be detected in untreated grape juice early in the experiment

**Table II, cell count (CFU/ml) for different spoilage bacteria in grape juice treated with glucose oxidase or untreated grape juice after 2 resp. 4 days of incubation.**

| | Day 2 - GOX | Day 2 + GOX | Day 4 - GOX | Day 4 + GOX | Day 7 - GOX | Day 7 + GOX |
|---|---|---|---|---|---|---|
| control | 3.3E+02 | 0.0E+00 | 0.0E+00 | 0.0E+00 | 0.0E+00 | 0.0E+0 |
| | | | | | | 0 |
| *Lb. brevis* | 2.4E+05 | 2.1E+03 | 1.2E+05 | 0.0E+00 | 1.2E+08 | |
| subsp. | | | | | | 0.0E+0 |
| Gravesensis | | | | | | 0 |
| *Lb. brevis* | 6.7E+02 | 0.0E+00 | 3.3E+02 | 2.9E+04 | 3.3E+05 | |
| subsp. | | | | | | 5.8E+0 |
| Otakiensis | | | | | | 2 |
| *Lb. Nagelii* | 8.7E+03 | 4.0E+03 | 1.3E+03 | 0.0E+00 | 1.3E+06 | 0.0E+0 |
| | | | | | | 0 |
| *P. parvulus* | 3.9E+05 | 1.4E+03 | 4.4E+05 | 0.0E+00 | 4.4E+09 | 0.0E+0 |
| | | | | | | 0 |
| *P. pento-* | 6.2E+04 | 2.1E+03 | 9.0E+03 | 0.0E+00 | 9.0E+06 | 0.0E+0 |
| *saceus* | | | | | | 0 |
| *E. coli* | 1.0E+03 | 5.8E+02 | 5.0E+03 | 5.1E+03 | 5.0E+06 | 0.0E+0 |
| | | | | | | 0 |
| *A. aceti* | 6.2E+04 | 0.0E+00 | 0.0E+00 | 0.0E+00 | 0.0E+00 | 0.0E+0 |
| | | | | | | 0 |

### Conclusion

This example 1 demonstrates that treatment of grape juice with glucose oxidase strongly reduces growth of many spoilage bacteria

### EXAMPLE 2: Stability of glucose oxidase in grape juice during yeast alcohol fermentation

A full simulation of a general wine making process was done at laboratory scale. Glucose oxidase was added 3 days prior to the alcoholic fermentation. The alcoholic fermentation was allowed to run for eleven days after which the malolactic fermentation was performed. This was allowed to run for 10 days. Glucose oxidase activity was measured after 1 day, 7 days and 22 days.

### Enzymatic pre-treatment of the must

The six flasks were divided in three groups of two flasks.
The grape juice in group 1 was preincubated for three days with 0.5 g/I glucose oxidase (Hyderase, Amano, > 15,000 u/g), the grape juice in the second group with 0.5 g/I glucose oxidase and 2 g/I Glucose Isomerase (Sigma, G4166-50g, >350 u/g) and the grape juice in the control group was not treated with enzymes. Following enzyme addition, the flasks were vigorously aerated for three days in the presence of the enzymes, before the alcoholic fermentation was started. Aeration is important since oxygen is required in the glucose oxidase mediated enzymatic conversion.

### Alcoholic fermentation

The alcoholic fermentation was started by inoculation with re-hydrated freeze dried wine yeast (*Saccharomyces cerevisiae* Merit.Ferm, Chr. Hansen, 0.1 g/l) to a final concentration of 9E+05 CFU/ml. Re-hydration was performed in peptone water (15 g/I Tryptone, Oxoid L 42.9 g/I NaCl, 1.14 g/l 2% antifoam 1510, BHD 63215) for 10 minutes at room temperature.
At this point the aeration was stopped and the process became depleted for oxygen during the following days as a result of the yeast metabolism. The alcoholic fermentation was allowed to run for eleven days at room temperature which resulted in almost complete conversion of all sugar to alcohol.

### Malolactic fermentation

Eleven days after the start of the alcoholic fermentation the malolactic fermentation was started by addition of *O*. *oeni* (Viniflora, Chr. Hansen. Batch no.: 2711097) to the fermented grape juice. Freeze dried *O*. *oeni* (0.7 g of 8.2 E+11 CFU/g) was allowed to re-hydrate for 10 minutes in 100 ml of peptone water 15 g/I Tryptone, Oxoid L 42.9 g/I NaCl, 1.14 g/l 2% antifoam 1510, BHD 63215). Three ml was added to 4000 ml of fermented grape juice, resulting in a final concentration of 4.3*10⁶ CFU/ml. This was allowed to stand for another 10 days at room temperature.

### Glucose oxidase enzyme activity

Glucose oxidase activity was determined using the Glucose oxidase assay kit (Megazyme, cat. Nr. K-GLOX 01/05) following the instructions of the manufacturer.

### Results

Glucose oxidase was measured 4, 7 and 22 days after the start of the alcoholic fermentation. GOX activities dropped severely during the first days of incubation, most likely as a result of oxygen depletion.
As shown in Table III, after 7 days almost all of the GOX activity was recovered as compared to after 4 days. Even after an incubation of 22 days approximately half of the GOX activity still was present in the must.

**Table III. GOX activity remaining in the fermented grape juice 7 resp. 22 days after the start of the alcoholic fermentation as compared to day 4. All data measured in duplicate, except Hyderase day 4.**

| Treatment | Day | GOX activity (U/I) |
|---|---|---|
| Hyderase | 4 | 175 |
| Hyderase +isomerase | 4 | 200 |
| Hyderase | 10 | 139 |
| Hyderase +isomerase | 10 | 179 |
| Hyderase | 26 | 80 |
| Hyderase +isomerase | 26 | 97 |

### Conclusion:

The results of Example 2 demonstrate that GOX is stable after 4 days of incubation and it can maintain effective activity during the yeast alcohol fermentation. As shown in example 1, when there is effective GOX activity present in the grape juice there is a strongly reduces growth of many spoilage bacteria and this positive effect can then be maintained during the whole of the wine making process.

### EXAMPLE 3: GOX - no inhibition of anaerobic Oenococcus oeni growth

The effect of enzymatic treatment on growth of *Oenococcus oeni* was determined in a simulated wine production process, carried out as described in Example 2.

Basically, glucose oxidase was added to the grape juice 3 days prior to the alcoholic fermentation. The alcoholic fermentation was allowed to run for eleven days after which the malolactic fermentation was performed. This was allowed to run for 10 days.

### Results

Samples were taken at different days after the start of the malolactic fermentation and viable cell counts were determined. As shown in table IV growth of Oe*nococcus oeni* in untreated grape juice was not significantly different from growth in juice treated with glucose oxidase.

**Table IV. Viable O. oeni cell count during the malolactic fermentation. The grape juice had been pre-treated with enzymes for three days as indicated, followed by the alcoholic fermentation. O. oeni was added at t = 11 days.**

| Days | Treatment | CFU/ml |
|---|---|---|
| 11 (inoculation) | Control | 2.8 +E06 |
| | GOX | 1.0 ± 1.4 +E06 |
| 16 | Control | 3.0 ± 0.5 +E06 |
| | GOX | 1.0 +E05 |
| 21 | Control | 7.3 ± 1.3 +E06 |
| | GOX | 1.2 ± 0.1 +E05 |

### Conclusion:

The results of Example 3 demonstrate that growth of a wanted anaerobic Oeno*coccus oeni* microorganism was not significantly reduced by the addition of GOX.

### REFERENCES

1. D.F. Malherbe et al (Appl. Microbial Biotechnology (2003) 61:502-511)
2. US4675191 (Novo Industri, Denmark - published 1987)

## Claims

1. A method for production of a wine, wherein the method is reducing the spoilage of wine by unwanted aerobic microorganisms, which comprises following steps:
(1): treating grape juice during the alcohol yeast fermentation or the wine during storage with an effective amount of a glucose oxidase composition, comprising a relevant effective amount of active glucose oxidase enzyme as such, for a period of time sufficiently long to remove a significant part of O₂ from the grape juice during the alcohol yeast fermentation or from the wine during storage;
and thereafter,
(2): performing further adequate step(s) to make the final wine.

2. The method of claim 1, wherein the treatment of the grape juice during the alcohol yeast fermentation of step (1) of claim 1 is done by addition of the glucose oxidase composition within at maximum 30 minutes before the yeast cells used for the alcohol yeast fermentation is added to the grape juice or during the actual alcohol yeast fermentation, which by definition is after the yeast cells used for the alcohol yeast fermentation have been added to the grape juice.

3. The method of claims 1 or 2, wherein the treatment of the grape juice during the alcohol yeast fermentation of step (1) of claim 1 is done by addition of the glucose oxidase composition together with a malolactic starter culture, preferably *a Oenococcus oeni* malolactic starter culture.

4. The method of claim 1, wherein the treatment of the wine during storage of step (1) of claim 1 is done by addition of the glucose oxidase composition during storage of the wine.

5. The method of any of the preceding claims, wherein in step (1) of claim 1 the grape juice during the alcohol yeast fermentation or the wine during storage is also treated with an effective amount of a preparation with catalase activity for a period of time adequate to convert at least a portion of the H₂O₂ in the grape juice or the wine during storage into O₂ + H₂O.

6. The method of any of the preceding claims, wherein the effective amount of glucose oxidase oxidase is
(i): a glucose oxidase activity between 100 and 50,000,000 international units per hl of grape juice.

7. The method of claim 6, wherein the glucose oxidase activity is between 1,000 and 1,000,000 international units per hl of grape juice.

8. The method of any of the preceding claims, wherein the effective amount and the period of time for glucose oxidase enzyme treatment during step (1) is so that:
(A): 4 days after the addition of the effective amount of the glucose oxidase the amount of the unwanted aerobic microorganisms it reduced by a factor of at least 100; and
wherein the unwanted aerobic microorganisms are the total amount of one or more species selected from the genera *Pediococcus, Lactobacillus, Acetobacter* or *Brettanomyces.*

9. The method of any of the preceding claims, wherein there is, in the method of claim 1, also added glucose isomerase by following extra step:
(A): treating the grape juice during the alcohol yeast fermentation with an effective amount of glucose isomerase.

10. The method of any of the preceding claims, wherein the wine is white wine, red wine, still wine or sparkling wine.
